# EUROPEAN PATENT APPLICATION

(11) **EP 4 832 104 A1**
(43) Date of publication of application: **28.10.2026**
(21) Application number: 24908013.6
(22) Date of filing: 17.12.2024
(51) Int. Cl.: H01M 4/525, H01M 4/505, H01M 4/131, H01M 10/052, C01G 53/00, H01M 4/02

(54) **CATHODE ACTIVE MATERIAL FOR LITHIUM SECONDARY BATTERY, METHOD FOR PREPARING SAME, AND LITHIUM SECONDARY BATTERY COMPRISING SAME**

(30) Priority: 18.12.2023 KR 20230184953
(71) Applicant: POSCO Holdings Inc., Pohang-si, Gyeongsangbuk-do 37859 (KR)
(72) Inventor: PARK, Jung Woo, Pohang-si, Gyeongsangbuk-do 37859 (KR); HAN, Chang Joo, Pohang-si, Gyeongsangbuk-do 37859 (KR); HWANGBO, Geun, Pohang-si, Gyeongsangbuk-do 37859 (KR); LEE, Jaeeun, Pohang-si, Gyeongsangbuk-do 37859 (KR); LEE, Dong Jae, Pohang-si, Gyeongsangbuk-do 37859 (KR); KIM, Chang Min, Pohang-si, Gyeongsangbuk-do 37859 (KR)
(74) Representative: Pfenning, Meinig & Partner mbB
(86) International application number: PCT/KR2024/020498
(87) International publication number: WO 2025/135730

(57) **Abstract**

The present invention relates to a positive electrode active material for a lithium secondary battery, including a nickel-containing lithium metal oxide in a single particle form, wherein the lithium metal oxide includes Zr and Ti as doping elements, and the lithium metal oxide has a ratio of a peak intensity of a (003) plane to a peak intensity of a (104) plane (I(003)/I(104)) of 1.53 to 1.7 when analyzed by an X-ray diffraction pattern.

## Description

### [TECHNICAL FIELD]

The present invention relates to a positive electrode active material for a lithium secondary battery, a method for manufacturing the same, and a lithium secondary battery including the same, and more particularly, to a single-particle-type positive electrode active material for a lithium secondary battery, a method for manufacturing the same, and a lithium secondary battery including the same.

### [BACKGROUND ART]

As positive electrode active materials for lithium secondary batteries, lithium cobalt oxide (LiCoO₂), lithium nickel oxide (LiNiO₂), lithium manganese oxide (LiMnO₂, LiMnO₄, or the like), lithium iron phosphate compounds (LiFePO₄), and the like have been used. Among these, lithium cobalt oxide has advantages of a high operating voltage and excellent capacity characteristics, but cobalt, which is a raw material thereof, is expensive and has an unstable supply, and thus it is difficult to commercially apply lithium cobalt oxide to large-capacity batteries. Lithium nickel oxide has poor structural stability, and thus it is difficult to implement sufficient lifespan characteristics. Meanwhile, lithium manganese oxide has excellent stability but has a problem of poor capacity characteristics. Accordingly, lithium composite transition metal oxides including two or more transition metals have been developed so as to compensate for problems of lithium transition metal oxides including Ni, Co, or Mn alone, and among these, lithium nickel cobalt manganese oxide including Ni, Co, and Mn is widely used in the field of electric vehicle batteries.

Conventional lithium nickel cobalt manganese oxide was generally in the form of spherical secondary particles in which tens to hundreds of primary particles were aggregated. However, in the case of lithium nickel cobalt manganese oxide in the form of secondary particles in which many primary particles are aggregated as described above, there are problems in that particle breakage, in which primary particles are detached during a rolling process when manufacturing a positive electrode, is likely to occur, and cracks occur inside particles during charging and discharging. When particle breakage or cracks of the positive electrode active material occur, a contact area with an electrolyte solution increases, thereby increasing gas generation and active material deterioration due to side reactions with the electrolyte solution, and thus lifespan characteristics deteriorate.

In addition, demand for high-output and high-capacity batteries, such as batteries for electric vehicles, has recently increased, and accordingly, the nickel content in positive electrode active materials has gradually increased, that is, so-called "high nickel." When the nickel content in the positive electrode active material increases, initial capacity characteristics are improved. However, when charging and discharging are repeated, a large amount of highly reactive Ni⁴⁺ ions is generated, causing structural collapse of the positive electrode active material, thereby increasing a deterioration rate of the positive electrode active material, deteriorating lifespan characteristics, and reducing battery safety.

In order to solve the above problems, a technology of manufacturing a positive electrode active material in a single particle form, rather than a secondary particle form, by increasing a calcination temperature when manufacturing lithium nickel cobalt manganese oxide has been proposed. In the case of a positive electrode active material in a single particle form, since a contact area with an electrolyte solution is smaller than that of a conventional positive electrode active material in a secondary particle form, side reactions with the electrolyte solution are reduced, and particle strength is excellent, thereby reducing particle breakage during electrode manufacture. Accordingly, when a positive electrode active material in a single particle form is applied, there are advantages that gas generation is reduced and lifespan characteristics are excellent.

However, in order to grow a high-nickel single-particle-form lithium transition metal oxide into a positive electrode active material having a particle diameter of several micrometers, calcination at a high temperature for a long time is required. At this time, when calcination is performed at a high temperature for a long time, defects in a layered crystal structure occur due to over-calcination, and since the material is manufactured at a relatively high calcination temperature, a rocksalt phase is formed on the particle surface, thereby increasing surface resistance and reducing mobility of lithium ions. Such a reduction in lithium ion mobility primarily reduces capacity characteristics, and secondarily causes an imbalance in lithium ion migration, thereby causing crystal structure deformation and particle cracking, and thus there is a problem in that lifespan characteristics deteriorate, for example, resistance increases as cycles proceed.

### [DETAILED DESCRIPTION OF THE INVENTION]

### [Technical Problem]

Accordingly, an object of the present invention is to provide a positive electrode active material for a lithium secondary battery, as a lithium metal oxide in a single particle form, in which capacity and lifespan characteristics are improved, a method for manufacturing the same, and a lithium secondary battery including the same.

### [Technical Solution]

One embodiment of the present invention provides a positive electrode active material for a lithium secondary battery, including a nickel-containing lithium metal oxide in a single particle form, wherein the lithium metal oxide includes Zr and Ti as doping elements, and the lithium metal oxide has a ratio of a peak intensity of a (003) plane to a peak intensity of a (104) plane (I(003)/I(104)) of 1.53 to 1.7 when analyzed by an X-ray diffraction pattern.

A content of Zr in the lithium metal oxide may be 0.2 to 2.2 mol% based on the total number of moles of metals excluding lithium.

A content of Ti in the lithium metal oxide may be 0.2 to 2.2 mol% based on the total number of moles of metals excluding lithium.

A molar ratio of Ti to Zr (Ti/Zr) in the lithium metal oxide may be 0.5 to 4.

The lithium metal oxide may have a c-axis lattice constant of 14.22 to 14.4 Å.

The lithium metal oxide may have a full width at half maximum (FWHM) of a peak of a (003) plane of 0.12 to 0.14° when analyzed by an X-ray diffraction pattern.

The lithium metal oxide may have an average particle diameter (D50) of 3 to 6 µm.

A content of nickel in the lithium metal oxide may be 80 mol% or more based on the total number of moles of metals excluding lithium.

The lithium metal oxide may be represented by the following Chemical Formula 1.

[Chemical Formula 1] Liₐ[NiₓCo_{y}Mn_{z}Zr_{w1}Ti_{w2}M_{w3}]O₂

In Chemical Formula 1, 0.8≤a≤1.2, 0.8≤x<1, 0≤y≤0.2, 0≤z≤0.2, 0.002≤w1≤0.022, 0.002≤w2≤0.022, 0≤w3≤0.1, x+y+z+w1+w2+w3=1, and M is another doping element, and is Al, B, Y, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for manufacturing a positive electrode active material for a lithium secondary battery, including: preparing a metal precursor; mixing the metal precursor, a lithium raw material, and a doping raw material and then calcining the mixture to form a lithium metal oxide; and pulverizing the lithium metal oxide to form a lithium metal oxide in a single particle form, wherein the doping raw material includes a Zr raw material and a Ti raw material, and the lithium metal oxide in a single particle form has a ratio of a peak intensity of a (003) plane to a peak intensity of a (104) plane (I(003)/I(104)) of 1.53 to 1.7 when analyzed by an X-ray diffraction pattern.

The calcination may be performed at a temperature of 740 to 810°C.

The calcination may be performed for 5 to 10 hours.

The Zr raw material may be introduced such that a content of Zr in the lithium metal oxide is 0.2 to 2.2 mol% based on the total number of moles of metals excluding lithium.

The Ti raw material may be introduced such that a content of Ti in the lithium metal oxide is 0.2 to 2.2 mol% based on the total number of moles of metals excluding lithium.

The calcination may be performed in an oxygen atmosphere.

Still another embodiment of the present invention provides a positive electrode for a lithium secondary battery including the above-described positive electrode active material.

Still another embodiment of the present invention provides a lithium secondary battery including the positive electrode for a lithium secondary battery.

### [Advantageous Effects]

In the positive electrode active material for a lithium secondary battery according to one embodiment of the present invention, by doping Zr and Ti as doping elements into a lithium metal oxide in a single particle form, capacity and lifespan characteristics may be improved.

### [BRIEF DESCRIPTION OF THE DRAWINGS]

FIG. 1 is an SEM image of a positive electrode active material manufactured according to Example 2.
FIG. 2 is an SEM image of a positive electrode active material manufactured according to Example 3.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combination(s) thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

### 1. Positive Electrode Active Material

The positive electrode active material for a lithium secondary battery according to one embodiment of the present invention includes a lithium metal oxide in a single particle form. A positive electrode active material in a single particle form has a smaller specific surface area than a conventional general secondary particle, thereby reducing the amount of gas generated due to side reactions with an electrolyte solution, has high particle strength, thereby suppressing particle breakage during rolling, and can reduce crack occurrence as charging and discharging are repeated. Accordingly, the positive electrode active material has advantages of excellent lifespan and safety as compared with secondary particles, and can implement high energy density of an electrode.

In the present specification, "single particle" is a term used to distinguish from positive electrode active material particles in the form of secondary particles formed by aggregation of tens to hundreds of primary particles, which have conventionally been generally used, and is a concept including a single particle composed of one primary particle and aggregate particles of 50 or fewer primary particles. In addition, "secondary particle" means an aggregate, that is, a secondary structure, in which tens to hundreds of primary particles are aggregated by physical or chemical bonding between primary particles even without an intentional aggregation or granulation process for the primary particles.

In addition, "primary particle" means a minimum particle unit distinguished as one lump when a cross-section of a positive electrode active material is observed through a scanning electron microscope (SEM), and may be composed of one crystallite or a plurality of crystallites. In addition, "crystallite" means a distinguishable region in a primary particle in which atoms form a lattice structure in a certain direction.

Meanwhile, the lithium metal oxide according to the present invention may be a lithium metal oxide having a nickel-containing layered crystal structure.

In addition, the content of nickel in the lithium metal oxide according to the present invention may be 80 mol% or more based on the total number of moles of metals excluding lithium. Since the nickel content in the lithium metal oxide is included in such a high content, that is, so-called "high nickel," it is possible to achieve high capacity of the battery.

However, in order to grow a high-nickel single-particle-form lithium transition metal oxide into a positive electrode active material having a particle diameter of several micrometers, calcination at a high temperature for a long time is required. At this time, when calcination is performed at a high temperature for a long time, defects in a layered crystal structure occur due to over-calcination, and since the material is manufactured at a relatively high calcination temperature, a rocksalt phase is formed on the particle surface, thereby increasing surface resistance and reducing mobility of lithium ions. Such a reduction in lithium ion mobility primarily reduces capacity characteristics, and secondarily causes an imbalance in lithium ion migration, thereby causing crystal structure deformation and particle cracking, and thus there is a problem in that lifespan characteristics deteriorate, for example, resistance increases as cycles proceed.

Accordingly, the positive electrode active material for a lithium secondary battery according to one embodiment of the present invention includes Zr and Ti as doping elements in the lithium metal oxide. The doping elements provide an effect of promoting particle growth, so that the crystallite size and average particle diameter (D50) of the lithium metal oxide can be sufficiently grown even at a relatively low calcination temperature. Accordingly, while lowering the calcination temperature, a particle growth effect can be maximized, so that capacity and lifespan characteristics of the positive electrode active material can be improved, and positive electrode density can be increased to maximize energy density of the battery. Meanwhile, when the lithium metal oxide includes only Zr or only Ti as a doping element, it may be inappropriate in terms of simultaneously improving capacity and lifespan characteristics of the battery, compared with a case in which both Zr and Ti are included as doping elements.

In addition, the lithium metal oxide according to the present invention has a ratio of a peak intensity of a (003) plane to a peak intensity of a (104) plane (I(003)/I(104)) of 1.53 to 1.7, and more specifically 1.535 to 1.65, when analyzed by an X-ray diffraction pattern. The ratio of the peak intensity of the (003) plane to the peak intensity of the (104) plane (I(003)/I(104)) when the lithium metal oxide is analyzed by an X-ray diffraction pattern may be used as an index of a so-called cation mixing ratio. At this time, a larger I(003)/I(104) peak intensity ratio may mean a smaller cation mixing ratio. Cation mixing refers to a phenomenon in which transition metal cations in transition metal layers are partially substituted into lithium layers in a lithium metal oxide having a layered crystal structure, that is, a layered crystal structure in which lithium layers and transition metal layers are alternately stacked. At this time, the ratio of transition metal cations substituted in the lithium layers is referred to as a cation mixing ratio. In particular, nickel ions having an ionic radius similar to that of lithium ions are representative transition metals substituted into lithium layers. At this time, when the cation mixing ratio of the lithium metal oxide is too large, mobility of lithium ions in the lithium layers is reduced, thereby deteriorating capacity and lifespan characteristics of the battery. Accordingly, the lithium metal oxide according to the present invention satisfies the above range of the I(003)/I(104) peak intensity ratio, and thus effects of improving capacity and lifespan characteristics of the positive electrode active material can be more favorably implemented. Meanwhile, the I(003)/I(104) peak intensity ratio of the lithium metal oxide may sharply vary depending on a doping amount of each of Zr and Ti, a calcination temperature, a calcination time, a calcination atmosphere, and the like.

More specifically, the content of Zr in the lithium metal oxide may be 0.2 to 2.2 mol% based on the total number of moles of metals excluding lithium, and more specifically may be 0.4 to 2.1 mol%. When the content of Zr in the lithium metal oxide satisfies the above range, the above-described effect of improving capacity and lifespan characteristics of the positive electrode active material may be more favorably implemented.

In addition, the content of Ti in the lithium metal oxide may be 0.2 to 2.2 mol% based on the total number of moles of metals excluding lithium, and more specifically may be 0.4 to 2.1 mol%. When the content of Ti in the lithium metal oxide satisfies the above range, the above-described effect of improving capacity and lifespan characteristics of the positive electrode active material may be more favorably implemented.

In addition, a molar ratio of Ti to Zr (Ti/Zr) in the lithium metal oxide may be 0.5 to 4. When the molar ratio of Ti to Zr (Ti/Zr) in the lithium metal oxide satisfies the above range, the above-described effect of improving capacity and lifespan characteristics of the positive electrode active material may be more favorably implemented.

In addition, the lithium metal oxide may have a c-axis lattice constant of 14.22 to 14.4 Å, and more specifically 14.221 to 14.37 Å. The c-axis lattice constant of the lithium metal oxide may mean a width through which lithium ions in the lithium metal oxide can move, and thus may have a significant influence on electrochemical characteristics of the battery. As the c-axis lattice constant of the lithium metal oxide according to the present invention satisfies the above range, the above-described effect of improving capacity and lifespan characteristics of the positive electrode active material may be more favorably implemented. Meanwhile, the c-axis lattice constant of the lithium metal oxide may sharply vary depending on a doping amount of each of Zr and Ti, a calcination temperature, a calcination time, a calcination atmosphere, and the like. In addition, the c-axis lattice constant of the lithium metal oxide may be estimated using peak broadening of XRD data and may be quantitatively calculated through the Scherrer equation.

In addition, the lithium metal oxide may have a full width at half maximum (FWHM) of a peak of a (003) plane of 0.12 to 0.14° when analyzed by an X-ray diffraction pattern. The full width at half maximum of the peak of the (003) plane may mean a degree of development of a layered crystal structure of the lithium metal oxide, and thus may have a significant influence on electrochemical characteristics of the battery. As the full width at half maximum (FWHM) of the peak of the (003) plane of the lithium metal oxide according to the present invention satisfies the above range, the above-described effect of improving capacity and lifespan characteristics of the positive electrode active material may be more favorably implemented. Meanwhile, the full width at half maximum of the peak of the (003) plane of the lithium metal oxide may sharply vary depending on a doping amount of each of Zr and Ti, a calcination temperature, a calcination time, a calcination atmosphere, and the like.

In addition, the lithium metal oxide may have an average particle diameter (D50) of 3 to 6 µm. When the average particle diameter (D50) of the lithium metal oxide is too small, positive electrode density may decrease due to a decrease in positive electrode active material density, and thus positive electrode energy density may decrease. When the average particle diameter (D50) of the lithium metal oxide is too large, a movement distance of lithium ions becomes long, and thus capacity and rate characteristics may deteriorate. Accordingly, when the average particle diameter (D50) of the lithium metal oxide satisfies the above range, energy density of the battery can be favorably implemented. In the present specification, the average particle diameter (D50) may be defined as a particle diameter corresponding to 50% of the cumulative volume in a particle diameter distribution curve of particles. The average particle diameter (D50) may be measured using, for example, a laser diffraction method.

The lithium metal oxide may be more specifically represented by the following Chemical Formula 1.

[Chemical Formula 1] Liₐ[NiₓCo_{y}Mn_{z}Zr_{w1}Ti_{w2}M_{w3}]O₂

In Chemical Formula 1, 0.8≤a≤1.2, 0.8≤x<1, 0≤y≤0.2, 0≤z≤0.2, 0.002≤w1≤0.022, 0.002≤w2≤0.022, 0≤w3≤0.1, x+y+z+w1+w2+w3=1, and M is another doping element, and is Al, B, Y, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to a, that is, 0.8≤a≤1.2. When a is too small, capacity may decrease. When a is too large, the strength of the calcined positive electrode active material increases, so pulverization may be difficult, and gas generation may increase due to an increase in lithium by-products. Considering the effect of improving capacity characteristics of the positive electrode active material according to control of the lithium content and the balance of sinterability during active material manufacture, lithium may more preferably be included in an amount of 0.9≤a≤1.1.

In the lithium metal oxide of Chemical Formula 1, nickel may be included in an amount corresponding to x, that is, 0.8≤x<1. Accordingly, high capacity of the battery can be achieved.

In the lithium metal oxide of Chemical Formula 1, cobalt may be included in an amount corresponding to y, that is, 0≤y≤0.2. When the cobalt content is too small, crystallite size growth may be inhibited and output characteristics may decrease. When the cobalt content is too large, manufacturing costs may increase and reversible capacity may decrease.

In the lithium metal oxide of Chemical Formula 1, manganese may be included in an amount corresponding to z, that is, 0≤z≤0.2. When the manganese content is too small, production unit cost may increase and active material stability may deteriorate. When the manganese content is too large, capacity and output characteristics of the battery may deteriorate.

In the lithium metal oxide of Chemical Formula 1, Zr, which is a doping element, may be included in an amount corresponding to w1, that is, 0.002≤w1≤0.022, and more specifically 0.004≤w1≤0.021. When the content of Zr satisfies the above range, capacity and lifespan characteristics of the battery may be favorably implemented.

In the lithium metal oxide of Chemical Formula 1, Ti, which is a doping element, may be included in an amount corresponding to w2, that is, 0.002≤w2≤0.022, and more specifically 0.004≤w2≤0.021. When the content of Ti satisfies the above range, capacity and lifespan characteristics of the battery may be favorably implemented.

In the lithium metal oxide of Chemical Formula 1, M, which is another doping element, may be included in an amount corresponding to w3, that is, 0≤w3≤0.1. At this time, M may be Al, B, Y, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement the other doping effect.

### 2. Method for Manufacturing Positive Electrode Active Material

Another embodiment of the present invention provides a method for manufacturing a positive electrode active material for a lithium secondary battery, including: preparing a metal precursor; mixing the metal precursor, a lithium raw material, and a doping raw material and then calcining the mixture to form a lithium metal oxide; and pulverizing the lithium metal oxide to form a lithium metal oxide in a single particle form, wherein the doping raw material includes a Zr raw material and a Ti raw material, and the lithium metal oxide in a single particle form has a ratio of a peak intensity of a (003) plane to a peak intensity of a (104) plane (I(003)/I(104)) of 1.53 to 1.7 when analyzed by an X-ray diffraction pattern.

Hereinafter, the method for manufacturing a positive electrode active material for a lithium secondary battery according to another embodiment of the present invention will be described in detail step by step.

First, a metal precursor is prepared.

The metal precursor may more specifically be a metal hydroxide.

The metal precursor may be manufactured, for example, by adding a complexing-agent-containing solution and a pH-adjusting-agent-containing solution to a metal-containing solution including a nickel raw material, a manganese raw material, or a cobalt raw material and performing a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a nickel fatty acid salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate salt, manganese citrate, a manganese salt such as a manganese fatty acid salt, a manganese oxide such as Mn₂O₃, MnO₂, and Mn₃O₄, an oxyhydroxide, manganese chloride, or a combination thereof, but is not limited thereto.

The metal-containing solution may be prepared by adding a nickel raw material, a manganese raw material, or a cobalt raw material to a solvent, specifically water, or a mixture of water and an organic solvent that can be uniformly mixed with water, for example, alcohol or the like.

The complexing-agent-containing solution performs a complex-forming role, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing-agent-containing solution may be used in the form of an aqueous solution, and at this time, as a solvent, water, or a mixture of water and an organic solvent uniformly mixable with water, for example, alcohol or the like, may be used.

The pH-adjusting-agent-containing solution performs a role of a precipitant or a pH adjusting agent, and may include an alkaline compound of a hydroxide of an alkali metal or alkaline earth metal, such as NaOH, KOH, or Ca(OH)₂, a hydrate thereof, or a combination thereof. Meanwhile, the pH-adjusting-agent-containing solution may also be used in the form of an aqueous solution, and at this time, as a solvent, water, or a mixture of water and an organic solvent uniformly mixable with water, for example, alcohol or the like, may be used. At this time, the pH-adjusting-agent-containing solution may be added in an amount such that the pH of the reaction solution becomes 10 to 13.

The coprecipitation reaction may be performed under an inert atmosphere such as nitrogen or argon, may be performed at a temperature of 30 to 70°C, and may be performed at pH 10 to 13.

By the above process, particles of nickel(-or manganese-cobalt) hydroxide are generated and precipitated in the reaction solution. The precipitated precursor particles may be separated according to a conventional method, washed with water, and dried to obtain a precursor. The precursor may be a secondary particle formed by aggregation of primary particles.

At this time, by adjusting concentrations of the nickel raw material, the cobalt raw material, or the manganese raw material, a molar ratio of nickel, cobalt, or manganese in the precursor may be adjusted. That is, concentrations of the nickel raw material, the cobalt raw material, and the manganese raw material may be adjusted so that a molar ratio of nickel, cobalt, or manganese in the lithium metal oxide, which is a final product, becomes within the range according to the present invention.

Next, the metal precursor, the lithium raw material, and the doping raw material are mixed and then calcined to form a lithium metal oxide.

At this time, the doping raw material may include a Zr raw material and a Ti raw material.

The Zr raw material is not particularly limited as long as it is a Zr-containing compound, but may be, for example, ZrO₂.

The Ti raw material is not particularly limited as long as it is a Ti-containing compound, but may be, for example, TiO₂.

As the lithium raw material, a lithium-containing sulfate, nitrate, acetate, carbonate, oxalate, citrate, halide, hydroxide, oxyhydroxide, or the like may be used, and it is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The Zr raw material may be introduced such that the content of Zr in the lithium metal oxide is 0.2 to 2.2 mol% based on the total number of moles of metals excluding lithium. The technical significance of adjusting the input amount of the Zr raw material is the same as described above, and thus will be omitted.

The Ti raw material may be introduced such that the content of Ti in the lithium metal oxide is 0.2 to 2.2 mol% based on the total number of moles of metals excluding lithium. The technical significance of adjusting the input amount of the Ti raw material is the same as described above, and thus will be omitted.

The calcination may be performed at a temperature of 740 to 810°C, and more specifically 740 to 800°C. Such a calcination temperature range is a calcination temperature range lower than a calcination temperature generally performed when manufacturing a conventional high-nickel single-particle positive electrode material. This is a phenomenon enabled by doping Zr and Ti into the lithium metal oxide as described above. When the calcination temperature satisfies the above range, a lithium metal oxide having a layered crystal structure can be well formed, while defects in the layered crystal structure due to over-calcination can be prevented, so that capacity and lifespan characteristics of the battery can be favorably implemented, and various X-ray diffraction analysis properties, including the I(003)/I(104) peak intensity of the lithium metal oxide, can be appropriately implemented within the ranges according to the present invention.

The calcination may be performed for 5 to 10 hours, and more specifically 5 to 9 hours. Such a calcination time range is a calcination time range shorter than a calcination time generally performed when manufacturing a conventional high-nickel single-particle positive electrode material. This is a phenomenon enabled by doping Zr and Ti into the lithium metal oxide as described above. When the calcination time satisfies the above range, a lithium metal oxide having a layered crystal structure can be well formed, while defects in the layered crystal structure due to over-calcination can be prevented, so that capacity and lifespan characteristics of the battery can be favorably implemented, and various X-ray diffraction analysis properties, including the I(003)/I(104) peak intensity of the lithium metal oxide, can be appropriately implemented within the ranges according to the present invention.

Next, the lithium metal oxide is pulverized to form a lithium metal oxide in a single particle form.

The pulverization may be performed using pulverization equipment generally used in the art. For example, the pulverization may be performed using a jet mill, but is not necessarily limited thereto.

Through the above series of manufacturing methods, a lithium metal oxide in a single particle form and having a composition according to the present invention, such as doping contents, can be formed, and the obtained lithium metal oxide can have various X-ray diffraction analysis properties, including the I(003)/I(104) peak intensity, appropriately implemented within the ranges according to the present invention. Accordingly, capacity and lifespan characteristics of the battery can be favorably implemented.

### 3. Positive Electrode and Lithium Secondary Battery

Still another embodiment of the present invention provides a positive electrode for a lithium secondary battery including the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and for example, stainless steel, aluminum, nickel, titanium, calcined carbon, or aluminum or stainless steel surface-treated with carbon, nickel, titanium, silver, or the like may be used. In addition, the positive electrode current collector may typically have a thickness of 3 to 500 µm, and fine irregularities may be formed on the surface of the positive electrode current collector to increase adhesion of the positive electrode active material. For example, it may be used in various forms such as a film, a sheet, a foil, a net, a porous body, a foam, and a nonwoven body.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer rubber (EPDM rubber), sulfonated EPDM, styrene butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and any conductive material may be used without particular limitation as long as it has electron conductivity without causing chemical change in the battery to be configured. Specific examples may include graphite such as natural graphite or artificial graphite; carbon-based materials such as carbon black, acetylene black, Ketjen black, channel black, furnace black, lamp black, summer black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may typically be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and optionally a binder, a conductive material, or a solvent, and then drying and rolling the composition. At this time, the types and contents of the positive electrode active material, binder, and conductive material are as described above.

The solvent may be a solvent generally used in the art, and examples thereof may include dimethyl sulfoxide (DMSO), isopropyl alcohol, N-methylpyrrolidone (NMP), acetone, water, and the like, and one thereof alone or a mixture of two or more thereof may be used. The amount of the solvent used is sufficient as long as it dissolves or disperses the positive electrode active material, the conductive material, and the binder in consideration of a coating thickness and manufacturing yield of the slurry, and then provides a viscosity capable of exhibiting excellent thickness uniformity during coating for manufacturing the positive electrode.

Alternatively, the positive electrode may be manufactured by casting the composition for forming a positive electrode active material layer on a separate support, and then laminating a film obtained by peeling the composition from the support onto the positive electrode current collector.

Still another embodiment of the present invention provides a lithium secondary battery including the above-described positive electrode for a lithium secondary battery.

More specifically, the lithium secondary battery may include a positive electrode, a negative electrode, a separator, and an electrolyte.

The lithium secondary battery may optionally further include a battery case for accommodating an electrode assembly of the positive electrode, the negative electrode, and the separator, and a sealing member for sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, and an aluminum-cadmium alloy. In addition, the negative electrode current collector may typically have a thickness of 3 to 500 µm, and, as in the positive electrode current collector, fine irregularities may be formed on the surface of the current collector to strengthen bonding force of the negative electrode active material. For example, it may be used in various forms such as a film, a sheet, a foil, a net, a porous body, a foam, and a nonwoven body.

The negative electrode active material layer may optionally include a binder and a conductive material together with a negative electrode active material. As an example, the negative electrode active material layer may be manufactured by applying and drying, onto a negative electrode current collector, a composition for forming a negative electrode active material layer including a negative electrode active material and optionally a binder and a conductive material, or may be manufactured by casting the composition for forming a negative electrode on a separate support and then laminating a film obtained by peeling the composition from the support onto the negative electrode current collector.

As the negative electrode active material, a compound capable of reversible intercalation and deintercalation of lithium may be used. Specific examples may include carbonaceous materials such as artificial graphite, natural graphite, graphitized carbon fibers, and amorphous carbon; metallic compounds alloyable with lithium, such as Si, Al, Sn, Pb, Zn, Bi, In, Mg, Ga, Cd, Si alloys, Sn alloys, or Al alloys; metal oxides capable of doping and dedoping lithium, such as SiOβ (0<β<2), SnO₂, vanadium oxide, and lithium vanadium oxide; or composites including the metallic compound and a carbonaceous material, such as Si-C composites or Sn-C composites, and any one thereof or a mixture of two or more thereof may be used. In addition, a metallic lithium thin film may also be used as the negative electrode active material. In addition, as the carbon material, both low-crystalline carbon and high-crystalline carbon may be used. Representative examples of low-crystalline carbon include soft carbon and hard carbon, and representative examples of high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is generally used as a separator in a lithium secondary battery. In particular, a separator having low resistance to ion movement of the electrolyte and excellent electrolyte solution impregnation ability is preferable. Specifically, a porous polymer film, for example, a porous polymer film manufactured from a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. In addition, a conventional porous nonwoven fabric, for example, a nonwoven fabric made of high-melting-point glass fibers, polyethylene terephthalate fibers, or the like may be used. In addition, a coated separator including a ceramic component or a polymer material may be used to secure heat resistance or mechanical strength, and may optionally be used in a single-layer or multilayer structure.

Examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like that can be used for manufacturing a lithium secondary battery, but are not limited thereto.

Specifically, the organic liquid electrolyte may include an organic solvent and a lithium salt.

As the organic solvent, any solvent may be used without particular limitation as long as it can serve as a medium through which ions participating in an electrochemical reaction of the battery can move. Specifically, as the organic solvent, ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (where R is a C2 to C20 linear, branched, or cyclic hydrocarbon group and may include a double-bond aromatic ring or an ether bond); amides such as dimethylformamide; dioxolanes such as 1,3-dioxolane; or sulfolanes may be used. Among these, carbonate-based solvents are preferable, and a mixture of a cyclic carbonate having high ionic conductivity and a high dielectric constant capable of improving charge and discharge performance of the battery, for example, ethylene carbonate or propylene carbonate, and a low-viscosity linear carbonate-based compound, for example, ethyl methyl carbonate, dimethyl carbonate, or diethyl carbonate, is more preferable. In this case, when the cyclic carbonate and the chain carbonate are mixed in a volume ratio of about 1:1 to about 1:9, the performance of the electrolyte solution may be excellent.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 to 2.0 M. When the concentration of the lithium salt is included in the above range, the electrolyte has appropriate conductivity and viscosity, thereby exhibiting excellent electrolyte performance, and lithium ions can effectively move.

In addition to the above electrolyte components, the electrolyte may further include one or more additives for the purpose of improving lifespan characteristics of the battery, suppressing a decrease in battery capacity, improving discharge capacity of the battery, and the like. Examples of the additives may include haloalkylene carbonate-based compounds such as difluoroethylene carbonate, pyridine, triethyl phosphite, triethanolamine, cyclic ethers, ethylene diamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride. At this time, the additive may be included in an amount of 0.1 to 5 wt% based on the total weight of the electrolyte.

Since the lithium secondary battery including the positive electrode active material according to the present invention as described above stably exhibits excellent discharge capacity, output characteristics, and capacity retention, it is useful in portable devices such as mobile phones, notebook computers, and digital cameras, and in electric vehicle fields such as hybrid electric vehicles (HEVs).

Accordingly, still another embodiment of the present invention provides a battery module including the lithium secondary battery as a unit cell, and a battery pack including the battery module.

The battery module or the battery pack may be used as a power source for at least one medium-to-large device among a power tool; an electric vehicle including an electric vehicle (EV), a hybrid electric vehicle, and a plug-in hybrid electric vehicle (PHEV); or a power storage system.

Hereinafter, embodiments of the present invention will be described in more detail through Examples. However, the following Examples are merely preferred embodiments of the present invention, and the present invention is not limited by the following Examples.

### Example 1

### (1) Manufacture of Positive Electrode Active Material

(Mixing) A precursor having a composition of Ni₀.₈₈Co₀.₀₉₅Mn₀.₀₂₅(OH)₂, LiOH·H₂O as a lithium raw material, ZrO₂ as a Zr raw material, and TiO₂ as a Ti raw material were introduced into a mixer and mechanically mixed to form a mixture. At this time, the input amount of ZrO₂ was such that the content of Zr in the lithium metal oxide was 0.5 mol% based on the total number of moles of metals excluding lithium, and the input amount of TiO₂ was such that the content of Ti in the lithium metal oxide was 0.5 mol% based on the total number of moles of metals excluding lithium.

(Calcination) Thereafter, the mixture was heated to 760°C through heat treatment under an oxygen atmosphere, and then calcined at a constant temperature of 760°C for 8 hours, and naturally cooled to form a lithium metal oxide.

(Pulverization) Thereafter, pulverization was performed using a jet mill, thereby forming a lithium transition metal oxide in a single particle form.

### (2) Manufacture of Lithium Secondary Battery

A slurry for manufacturing an electrode plate was prepared by mixing the manufactured positive electrode active material:conductive material (carbon black, denka black):binder (PVDF, KF1100) = 96.5:1.5:2 wt%, and adding NMP (N-methyl-2-pyrrolidone) to adjust the viscosity so that the solid content was about 30%. The manufactured slurry was coated on an Al foil having a thickness of 20 µm using a doctor blade, and then dried and rolled. The electrode loading amount was 15.4 mg/cm², and the rolling density (25°C, 20 kN) was 3.6 g/cm³.

As the electrolyte solution, 1 M LiPF₆ in EC:DMC:EMC=3:4:3 (vol%) to which 3.0 vol% of VC was added based on the total amount of the electrolyte solution was used, and a coin cell was manufactured using a PP separator and a lithium negative electrode (200 µm, Honzo metal).

### Other Examples, Comparative Examples, and Reference Examples

Positive electrode active materials and lithium secondary batteries were manufactured in the same manner as in Example 1, except that process conditions were changed as shown in Table 1 below.

**[Table 1]**

| Process Conditions | Zr Doping Amount (mol%) | Ti Doping Amount (mol%) | Ti/Zr Molar Ratio | Calcination Temperature (°C) | Calcination Time (h) | Calcination Atmosphere |
|---|---|---|---|---|---|---|
| Example 1 | 0.5 | 0.5 | 1 | 760 | 8 | Oxygen |
| Example 2 | 1 | 1 | 1 | 760 | 8 | Oxygen |
| Example 3 | 1 | 1 | 1 | 790 | 8 | Oxygen |
| Example 4 | 2 | 2 | 1 | 760 | 8 | Oxygen |
| Comparative Example 1 | 0 | 0 | 0 | 760 | 8 | Oxygen |
| Comparative Example 2 | 1 | 0 | 0 | 790 | 8 | Oxygen |
| Comparative Example 3 | 0 | 1 | 0 | 760 | 8 | Oxygen |
| Reference Example 1 | 0.05 | 0.5 | 10 | 760 | 5 | Oxygen |
| Reference Example 2 | 2.5 | 1 | 0.4 | 760 | 5 | Oxygen |
| Reference Example 3 | 0.5 | 0.05 | 0.1 | 790 | 5 | Oxygen |
| Reference Example 4 | 1 | 2.5 | 2.5 | 790 | 5 | Oxygen |
| Reference Example 5 | 0.2 | 1 | 5 | 790 | 8 | Oxygen |
| Reference Example 6 | 1.5 | 0.6 | 0.4 | 790 | 8 | Oxygen |
| Reference Example 7 | 1 | 1 | 1 | 700 | 8 | Oxygen |
| Reference Example 8 | 1 | 1 | 1 | 850 | 8 | Oxygen |
| Reference Example 9 | 0.5 | 0.5 | 1 | 760 | 4 | Oxygen |
| Reference Example 10 | 0.5 | 0.5 | 1 | 760 | 12 | Oxygen |

Tables 2 and 3 below summarize evaluation results of physical properties of positive electrode active materials and electrochemical characteristics of lithium secondary batteries according to Experimental Examples 2 and 3, which will be described below.

**[Table 2]**

| Active Material Properties | I(003)/I(104) Peak Intensity Ratio | FWHM of Peak of (003) Plane (°)` | c-Axis Lattice Constant (Å) |
|---|---|---|---|
| Example 1 | 1.5394 | 0.128 | 14.2435 |
| Example 2 | 1.5776 | 0.127 | 14.2223 |
| Example 3 | 1.5877 | 0.132 | 14.3022 |
| Example 4 | 1.598 | 0.134 | 14.3233 |
| Comparative Example 1 | 1.5112 | 0.122 | 14.0221 |
| Comparative Example 2 | 1.5231 | 0.12 | 14.0322 |
| Comparative Example 3 | 1.5025 | 0.114 | 14.0566 |
| Reference Example 1 | 1.4889 | 0.112 | 14.2654 |
| Reference Example 2 | 1.4904 | 0.123 | 14.2234 |
| Reference Example 3 | 1.5221 | 0.125 | 14.033 |
| Reference Example 4 | 1.5235 | 0.126 | 14.4223 |
| Reference Example 5 | 1.5466 | 0.127 | 14.4344 |
| Reference Example 6 | 1.6232 | 0.12 | 14.1123 |
| Reference Example 7 | 1.5087 | 0.114 | 14.0223 |
| Reference Example 8 | 1.5232 | 0.129 | 14.998 |
| Reference Example 9 | 1.4778 | 0.132 | 14.1123 |
| Reference Example 10 | 1.6566 | 0.137 | 14.7785 |

**[Table 3]**

| Battery Performance | Initial Charge Capacity (mAh/g) | Initial Discharge Capacity (mAh/g) | Initial Efficiency (%) | 1st Cycle Resistance (Ω) | 30th Cycle Resistance (Ω) | Resistance Increase Rate (%) |
|---|---|---|---|---|---|---|
| Example 1 | 229.5 | 207.1 | 90.2 | 12.21 | 29.11 | 138.41 |
| Example 2 | 229.6 | 207.5 | 90.4 | 11.91 | 28.43 | 138.71 |
| Example 3 | 229.4 | 208.1 | 90.7 | 11.66 | 27.1 | 132.42 |
| Example 4 | 229.8 | 207.4 | 90.3 | 11.88 | 26.2 | 120.54 |
| Comparative Example 1 | 227.4 | 206.8 | 90.9 | 13.8 | 39.7 | 187.68 |
| Comparative Example 2 | 229.7 | 204.5 | 89.0 | 13.69 | 34.6 | 152.74 |
| Comparative Example 3 | 230.4 | 207.5 | 90.1 | 12.07 | 32.2 | 166.78 |
| Reference Example 1 | 227.1 | 204 | 89.8 | 12.7 | 31.2 | 145.67 |
| Reference Example 2 | 227.5 | 204.2 | 89.8 | 13.2 | 33.5 | 153.79 |
| Reference Example 3 | 226.5 | 203.5 | 89.8 | 13.5 | 32.1 | 137.78 |
| Reference Example 4 | 226.1 | 205.4 | 90.8 | 12.6 | 32.5 | 157.94 |
| Reference Example 5 | 225.6 | 203.4 | 90.2 | 12.43 | 29.1 | 134.11 |
| Reference Example 6 | 227.3 | 199.9 | 87.9 | 11.12 | 24.06 | 116.37 |
| Reference Example 7 | 227.1 | 206.2 | 90.8 | 13.2 | 36.2 | 174.24 |
| Reference Example 8 | 221.9 | 191.7 | 86.4 | 10.24 | 19.23 | 87.79 |
| Reference Example 9 | 225.1 | 199.8 | 88.8 | 11.6 | 29 | 150.00 |
| Reference Example 10 | 222.3 | 197.8 | 89.0 | 10.56 | 20.2 | 91.29 |

### Experimental Example 1: SEM Image Evaluation of Positive Electrode Active Material

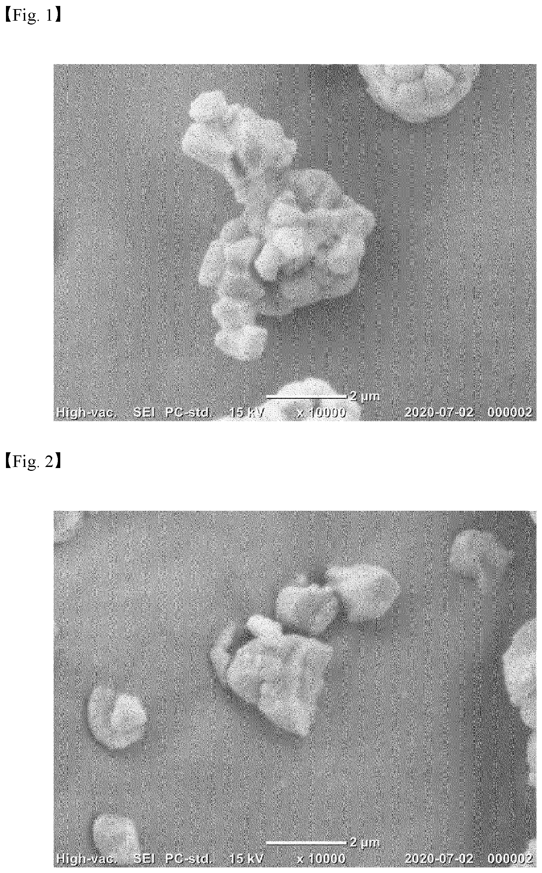

SEM (scanning electron microscope) images of the positive electrode active materials manufactured according to Example 2 and Example 3 were observed, and are shown in FIGS. 1 and 2, respectively, in order.

Referring to FIGS. 1 and 2, it was confirmed that the positive electrode active materials manufactured according to the Examples had a single particle form.

### Experimental Example 2: Evaluation of Physical Properties of Positive Electrode Active Material

### (1) Evaluation of I(003)/I(104) Peak Intensity Ratio and FWHM of (003) Plane

The I(003)/I(104) peak intensity ratio and the FWHM of the (003) plane were evaluated through X-ray diffraction pattern analysis.

### (2) Evaluation of c-Axis Lattice Constant

The c-axis lattice constant was evaluated through X-ray diffraction pattern analysis and Rietveld refinement.

### Experimental Example 3: Evaluation of Electrochemical Characteristics of Lithium Secondary Battery

### (1) Evaluation of Initial Capacity and Initial Efficiency

After a lithium secondary battery half-cell was manufactured and aged at 25°C for 12 hours, a charge/discharge test was performed at 25°C. For evaluation of initial capacity, 200 mAh/g was used as a reference capacity, charging was performed to 4.25 V at a constant current of 0.1 C, and then switched to constant voltage, and charging was performed until an end current reached 0.05 C. After charging, a rest time of 10 minutes was provided, and then discharging was performed to 2.5 V at a constant current of 0.1 C based on a reference capacity of 200 mAh/g.

### (2) Evaluation of High-Temperature Resistance Increase Rate (45°C, 30 Cycles)

After a lithium secondary battery half-cell was manufactured, charging was performed at 45°C to 4.25 V at a constant current of 0.5 C, and then switched to constant voltage, and charging was performed until an end current reached 0.05 C. After charging, a rest time of 10 minutes was provided, and then discharging was performed to 2.5 V at a constant current of 1.0 C. Under the above charge/discharge cycle conditions, charge/discharge was performed 30 times, and at this time, a resistance increase rate of the 30th cycle relative to the first cycle was calculated.

Referring to Tables 1 to 3, it was confirmed that, in the case of Examples 1 to 4, in which the composition, including the doping amounts of Zr and Ti in the lithium metal oxide, and overall calcination process conditions, including the calcination temperature, satisfied the ranges according to the present invention, the composition of the lithium metal oxide and various X-ray diffraction analysis-related physical properties, including the I(003)/I(104) peak intensity ratio, were appropriately implemented within the ranges according to the present invention. As a result, it was confirmed that battery capacity (initial discharge capacity), resistance characteristics (1st cycle resistance), and lifespan characteristics (resistance increase rate as cycles proceed) were comprehensively and very excellently implemented.

In contrast, in Comparative Example 1, as a result of Zr and Ti not being doped into the lithium metal oxide, it was confirmed that the I(003)/I(104) peak intensity ratio and c-axis lattice constant of the lithium metal oxide were outside the ranges according to the present invention. In addition, it was confirmed that battery capacity, resistance characteristics, and lifespan characteristics deteriorated.

In Comparative Example 2, as a result of Ti not being doped into the lithium metal oxide, it was confirmed that the I(003)/I(104) peak intensity ratio and c-axis lattice constant of the lithium metal oxide were outside the ranges according to the present invention. In addition, it was confirmed that battery capacity, resistance characteristics, and lifespan characteristics deteriorated.

In Comparative Example 3, as a result of Zr not being doped into the lithium metal oxide, it was confirmed that the I(003)/I(104) peak intensity ratio, the FWHM of the peak of the (003) plane, and the c-axis lattice constant of the lithium metal oxide were outside the ranges according to the present invention. In addition, it was confirmed that battery lifespan characteristics deteriorated.

In Reference Example 1, as a result of the doping amount of Zr in the lithium metal oxide being too small, it was confirmed that the I(003)/I(104) peak intensity ratio and the FWHM of the peak of the (003) plane of the lithium metal oxide were outside the ranges according to the present invention. In addition, it was confirmed that battery capacity, resistance characteristics, and lifespan characteristics deteriorated.

In Reference Example 2, as a result of the doping amount of Zr in the lithium metal oxide being too large, it was confirmed that the I(003)/I(104) peak intensity ratio of the lithium metal oxide was outside the range according to the present invention. In addition, it was confirmed that battery capacity, resistance characteristics, and lifespan characteristics deteriorated.

In Reference Example 3, as a result of the doping amount of Ti in the lithium metal oxide being too small, it was confirmed that the I(003)/I(104) peak intensity ratio and c-axis lattice constant of the lithium metal oxide were outside the ranges according to the present invention. In addition, it was confirmed that battery capacity and resistance characteristics deteriorated.

In Reference Example 4, as a result of the doping amount of Ti in the lithium metal oxide being too large, it was confirmed that the I(003)/I(104) peak intensity ratio and c-axis lattice constant of the lithium metal oxide were outside the ranges according to the present invention. In addition, it was confirmed that battery capacity, resistance characteristics, and lifespan characteristics deteriorated.

In Reference Example 5, even though the respective doping amounts of Zr and Ti in the lithium metal oxide were appropriate, as a result of the Ti/Zr molar ratio being too large, it was confirmed that the c-axis lattice constant of the lithium metal oxide was outside the range according to the present invention. In addition, it was confirmed that battery capacity and resistance characteristics deteriorated.

In Reference Example 6, even though the respective doping amounts of Zr and Ti in the lithium metal oxide were appropriate, as a result of the Ti/Zr molar ratio being too small, it was confirmed that the c-axis lattice constant of the lithium metal oxide was outside the range according to the present invention. In addition, it was confirmed that battery capacity characteristics deteriorated.

In Reference Example 7, even though the composition of the lithium metal oxide was appropriate, as a result of the calcination temperature being too low, it was confirmed that the I(003)/I(104) peak intensity ratio, the FWHM of the peak of the (003) plane, and the c-axis lattice constant of the lithium metal oxide were outside the ranges according to the present invention. In addition, it was confirmed that battery capacity, resistance characteristics, and lifespan characteristics deteriorated.

In Reference Example 8, even though the composition of the lithium metal oxide was appropriate, as a result of the calcination temperature being too high, it was confirmed that the I(003)/I(104) peak intensity ratio and c-axis lattice constant of the lithium metal oxide were outside the ranges according to the present invention.

In Reference Example 9, even though the composition of the lithium metal oxide was appropriate, as a result of the calcination time being too short, it was confirmed that the I(003)/I(104) peak intensity ratio and c-axis lattice constant of the lithium metal oxide were outside the ranges according to the present invention. In addition, it was confirmed that battery capacity and lifespan characteristics deteriorated.

In Reference Example 10, even though the composition of the lithium metal oxide was appropriate, as a result of the calcination time being too long, it was confirmed that the I(003)/I(104) peak intensity ratio and c-axis lattice constant of the lithium metal oxide were outside the ranges according to the present invention. In addition, it was confirmed that battery capacity characteristics deteriorated.

Although preferred embodiments of the present invention have been described above, the present invention is not limited thereto, and various modifications can be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A positive electrode active material for a lithium secondary battery, comprising:
a nickel-containing lithium metal oxide in a single particle form,
wherein the lithium metal oxide comprises Zr and Ti as doping elements, and
wherein the lithium metal oxide has a ratio of a peak intensity of a (003) plane to a peak intensity of a (104) plane (I(003)/I(104)) of 1.53 to 1.7 when analyzed by an X-ray diffraction pattern.

2. The positive electrode active material for a lithium secondary battery of claim 1,
wherein a content of Zr in the lithium metal oxide is 0.2 to 2.2 mol% based on a total number of moles of metals excluding lithium.

3. The positive electrode active material for a lithium secondary battery of claim 1,
wherein a content of Ti in the lithium metal oxide is 0.2 to 2.2 mol% based on a total number of moles of metals excluding lithium.

4. The positive electrode active material for a lithium secondary battery of claim 1,
wherein a molar ratio of Ti to Zr (Ti/Zr) in the lithium metal oxide is 0.5 to 4.

5. The positive electrode active material for a lithium secondary battery of claim 1,
wherein the lithium metal oxide has a c-axis lattice constant of 14.22 to 14.4 Å.

6. The positive electrode active material for a lithium secondary battery of claim 1,
wherein the lithium metal oxide has a full width at half maximum (FWHM) of a peak of a (003) plane of 0.12 to 0.14° when analyzed by an X-ray diffraction pattern.

7. The positive electrode active material for a lithium secondary battery of claim 1,
wherein the lithium metal oxide has an average particle diameter (D50) of 3 to 6 µm.

8. The positive electrode active material for a lithium secondary battery of claim 1,
wherein a content of nickel in the lithium metal oxide is 80 mol% or more based on a total number of moles of metals excluding lithium.

9. The positive electrode active material for a lithium secondary battery of claim 1,
wherein the lithium metal oxide is represented by the following Chemical Formula 1:
[Chemical Formula 1] Liₐ[NiₓCo_{y}Mn_{z}Zr_{w1}Ti_{w2}M_{w3}]O₂
wherein, in Chemical Formula 1, 0.8≤a≤1.2, 0.8≤x<1, 0≤y≤0.2, 0≤z≤0.2, 0.002≤w1≤0.022, 0.002≤w2≤0.022, 0≤w3≤0.1, x+y+z+w1+w2+w3=1, and M is another doping element, and is Al, B, Y, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

10. A method for manufacturing a positive electrode active material for a lithium secondary battery, comprising:
preparing a metal precursor;
mixing the metal precursor, a lithium raw material, and a doping raw material and then calcining the mixture to form a lithium metal oxide; and
pulverizing the lithium metal oxide to form a lithium metal oxide in a single particle form,
wherein the doping raw material comprises a Zr raw material and a Ti raw material, and
wherein the lithium metal oxide in a single particle form has a ratio of a peak intensity of a (003) plane to a peak intensity of a (104) plane (I(003)/I(104)) of 1.53 to 1.7 when analyzed by an X-ray diffraction pattern.

11. The method for manufacturing a positive electrode active material for a lithium secondary battery of claim 10,
wherein the calcination is performed at a temperature of 740 to 810°C.

12. The method for manufacturing a positive electrode active material for a lithium secondary battery of claim 10,
wherein the calcination is performed for 5 to 10 hours.

13. The method for manufacturing a positive electrode active material for a lithium secondary battery of claim 10,
wherein the Zr raw material is introduced such that a content of Zr in the lithium metal oxide is 0.2 to 2.2 mol% based on a total number of moles of metals excluding lithium.

14. The method for manufacturing a positive electrode active material for a lithium secondary battery of claim 10,
wherein the Ti raw material is introduced such that a content of Ti in the lithium metal oxide is 0.2 to 2.2 mol% based on a total number of moles of metals excluding lithium.

15. The method for manufacturing a positive electrode active material for a lithium secondary battery of claim 10,
wherein the calcination is performed in an oxygen atmosphere.

16. A positive electrode for a lithium secondary battery, comprising the positive electrode active material according to claim 1.

17. A lithium secondary battery comprising the positive electrode for a lithium secondary battery according to claim 16.
